**Europäisches Patentamt**

**European Patent Office**

**Office européen des brevets**

(19)

(11) Veröffentlichungsnummer: **0 270 487 B1**

(12) **EUROPÄISCHE PATENTSCHRIFT**

(45) Veröffentlichungstag der Patentschrift:
29.08.90

(51) Int. Cl.⁵: **G01B 3/20**

(21) Anmeldenummer: **87810613.7**

(22) Anmeldetag: **26.10.87**

(54) Schieblehre.

(30) Priorität: **04.12.86 CH 4839/86**

(43) Veröffentlichungstag der Anmeldung:
**08.06.88 Patentblatt 88/23**

(45) Bekanntmachung des Hinweises auf die Patenterteilung:
**29.08.90 Patentblatt 90/35**

(84) Benannte Vertragsstaaten:
**DE FR GB IT SE**

(56) Entgegenhaltungen:
**DE-A- 2 134 423**
**DE-A- 2 744 161**

(73) Patentinhaber: **Meyer, Hans, rue du Bugnon, 24,
CH-1020 Renens(CH)**

(72) Erfinder: **Meyer, Hans, rue du Bugnon, 24,
CH-1020 Renens(CH)**

(74) Vertreter: **Ardin, Pierre, PIERRE ARDIN & CIE 22, rue du
Mont-Blanc, CH-1201 Genève(CH)**

## Beschreibung

Schieblehren bestehen bekanntlich aus einer Schiene mit einem an ihr befestigten Messschnabel und einem auf der Schiene beweglich angeordneten Schieber, der einen beweglichen Messschnabel trägt.

Gemäss bestehenden Industrienormen sollen Schiene und Messschnäbel aus gehärtetem Stahl bestehen, dies aus Gründen der Abnützung und wegen des günstigen Wärmeausdehnungs-Koeffizienten dieses Metalles.

Diese klassische Ausführung der Schieblehre bringt einige Nachteile mit sich: Stahl weist ein relativ hohes spezifisches Gewicht auf, so dass besonders grössere Schieblehren schwer zu handhaben sind. Ausserdem bringt die herkömmliche Gestaltung dieses Instrumentes eine sehr weitgehende und kostspielige Bearbeitung mit sich, die sich preislich nachteilig auswirkt.

Die vorliegende Erfindung bezweckt, diesen Nachteilen abzuhelfen. Sie betrifft eine Schieblehre, bei welcher Schiene und Scheiber unter Berücksichtigung von arbeits- und materialsparenden Methoden aufgebaut sind, bei gleichzeitiger Wahrung und Verbesserung der an das Instrument gestellten messtechnischen Anforderungen. Dies wird dadurch erreicht, dass die Schiene als Verbundkonstruktion aufgebaut ist, bestehend aus einem Kern und auf diesem befestigten Führungselementen, auf welchen der Schieber gleitend angeordnet ist.

Es ergeben sich dadurch eine rationelle Fertigung, und, insbesondere bei grösseren Schieblehren, eine erhebliche Verminderung des Gewichtes und verbesserte Messeigenschaften. Der Kern der Schiene muss nicht gehärtet werden, wie dies bei normalen Gerätewn der Fall ist; er ist deshalb dem Verzug weniger ausgesetzt, welchen die weitere Verarbeitung mit sich bringt. Die Führungselemente garantieren dabei eine lange Lebensdauer und einwandfreie Führung des Schiebers. Sie sind mit billigen Mitteln herstellbar.

In einer bevorzugten Ausführungsform sind der Schieber und die Messschnäbel unter Ausnahme der Messanschläge mit einer schützenden Umhüllung versehen.

Die für die Messung unwichtigen Stellen sind dadurch mit einem geeigneten Stoff, zum Beispiel einer Plastikspritzmasse, abgedeckt und müssen somit nicht bearbeitet werden. Diese Umhüllung schützt die Messorgane gegen Stösse, auch erlaubt sie eine angenehmere Bedienung des Instrumentes und eine ästhetische äussere Erscheinung.

Weitere vorteilhafte Ausgestaltungen ergeben sich aus den Merkmalen der abhängigen Patentansprüche und der nachfolgenden Beschreibung mehrerer in der beigefügten Zeichnung schematisch dargestellten Ausführungsbeispiele.

Es zeigen:

Fig. 1 eine mit einem mm-Massstab versehene Schieblehre,

Fig. 2 eine mit einer elektronischen Messvorrichtung und Digital-An-zeige ausgerüsteten Schieblehre,

Fig. 3 ein Querschnitt 3-3 durch die Schiene Fig. 1,

Fig. 4 ein Querschnitt 4-4 durch einen Messschnable der Fig. 1,

Fig. 5 bis 8 Ausführungsvarianten der Schiene im Querschnitt.

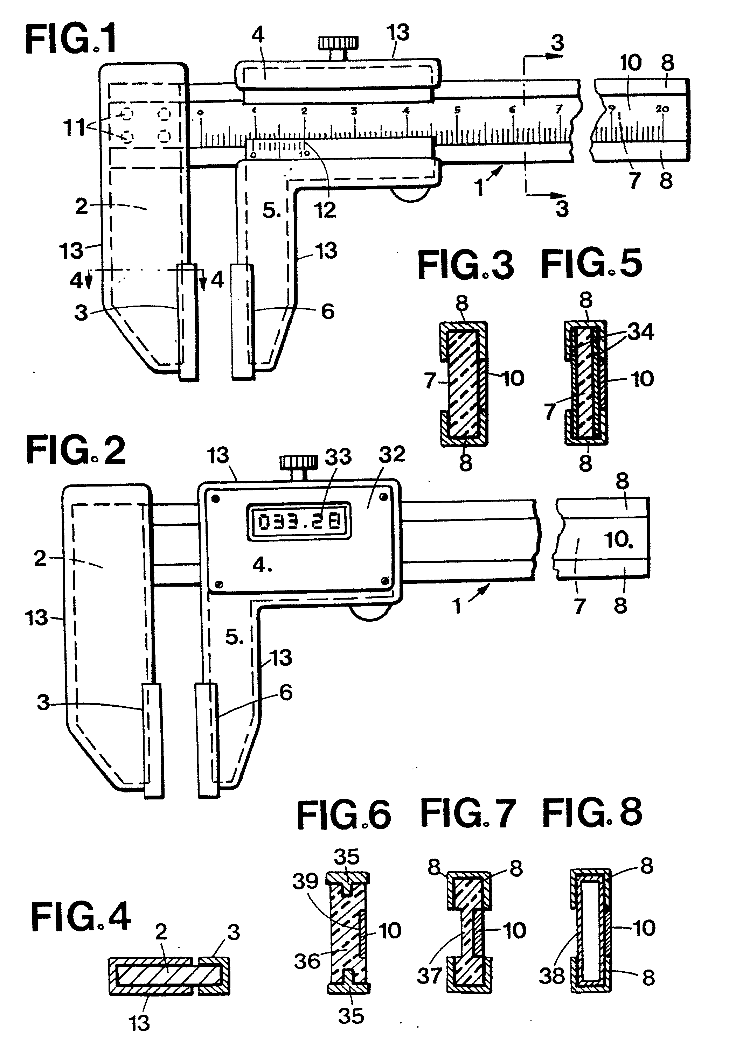

Die in Figur 1 dargestellte Schieblehre besteht aus einer Schiene 1, einem an ihr befestigten Messschnable 2 mit Messanschlag 3 und einem Schieber 4 mit Messschnabel 5 und darauf befestigtem Messanschlag 6. Die Schiene 1 ist als Verbundkonstruktion aufgebaut und umfasst einen rechteckigen Kern 7, welcher an seinen schmalen Längsflächen mit U-formigen Führungselementen 8 versehen ist (Fig. 3). Diese sind mit dem Kern 7 vorteilhafterweise durch Kleben verbunden und bestehen vorzugsweise aus rostsicherem, gehärtetem Stahl, damit die Schieberführung eine möglichst grosse Abnützungsbeständigkeit aufweist und gegen äussere Einflüsse unempfindlich wird. Naturgemäss werden die Führungen vor dem Aufkleben gehärtet und nach Montage fertig bearbeitet.

Der Kern 7 besteht aus einem mit Fasern verstärkten Kunststoff, der einem dem Stahl ähnlichen Wärmeausdehnungs-Koeffizient aufweist, wie dies zum Beispiel bei gebundenen Kohlenstoffasern der Fall ist, bie welchen auch ausreichende Festigkeitswerte erzielbar sind.

Die Wahl des Kern-Materials richtet sich nach der Grösse der Schieblehre: Für kleine Schieblehren kann der Kern zum Beispiel aus ungehärtetem Stahl bestehen, für grössere aus einem mit Fasern verstärkten Kunststoff.

Ein Massstab 10 ist zwischen den Schenkeln der gegenüberliegenden U-Profile der Führungselemente 8 auf dem Kern 7 durch Kleben befestigt. Der feste Messschnabel 2 ist mit der Schiene 1 durch Nieten 11 und gleichzeitiges Kleben verbunden.

Der Schieber 4 gleitet in bekannter Art auf den Führungselementen 8 und ist mit einem dem Massstab 10 gegenüberliegenden Nonius 12 versehen. Die Messanschläge 3 und 6 weisen eine U-Form auf (Fig. 3) und sind durch Kleben oder andere Mittel auf den Messschnäbeln 2 und 5 befestigt. Sie bestehen aus einem geeigneten Hartmaterial, wie zum Beispiel gehärtetem Stahl, Wolframkarbid, Keramik.

Mit Ausnahme der Teile welche an der Messfunktion beteiligt sind, wie Nonius 12, die Messanschläge 3 und 6 oder eventuelle andere Messorgane, z. B. Innenmessspitzen, sind der Schieber 4 und die Messschnäbel 2 und 5 mit einer schützenden Umhüllung 13 versehen, welche einerseits nicht zu bearbeitende Flächen abdeckt und andererseits Schutz und Isolierung bietet. Diese aus einem Deckmaterial bestehende Umhüllung 13 kann beispielsweise durch Umspritzen einer Plastikmase angebracht werden.

In Figur 2 ist eine Schieblehre mit elektronischer Messvorrichtung 32 und Digital-Anzeige 33 dargestellt. Der entsprechende Massstab 10 ist auf der Schiene 1 befestigt. Die Messung kann dabei nach einer optischen, magnetischen, kapazitiven oder anderen geeigneten Methode erfolgen. Was die allgemeine Anordnung der Schieblehre anbelangt, so gelten auch hier die oben genannten Ausführungen. Die Umhüllung 13 kommt dabei besonders vorteilhaft zur Geltung, da sie die elektronische Messvorrichtung 32 gegen Stösse und andere äussere Einwirkungen schützt und isoliert. Der obere Teil der Messvorrichtung 32 wird durch einen abnehmbaren Deckel verschlossen. In den Figuren 5 bis 8 sind weitere mögliche Ausführungsformen der Schiene dargestellt. In Figur 5 ist der Kern 7 beidseitig mit Deckstreifen 34 verstärkt und geschüz und mit U-förmigen Führungselementen 8 versehen, während der Massstab 10 sich zwischen zwei Schenkeln der Führungselemente 8 befindet. Die Deckstreifen 34 sind zum Beispiel aus rostsicherem Stahlband gefertigt und auf dem Kern 7 durch Kleben befestigt. Die U-Profil aufweisenden Führungselemente sind über die Deckstreifen oder Bänder 34 gestülpt und auf diesen befestigt. In Figur 6 werden die Führungselemente 35 durch T-Profile gebildet, welche in die Schmalseiten des rechteckigen Kernes 36 eingelassen sind. Der Massstab 10 findet dabei in einer Aussparung 39 des Kernes 36 Platz. Anstelle eines Rechteckes kann der Kern einen anderen Querschnitt aufweisen. In Figur 7 wird der Kern von einem Doppel-T-Profil 37 gebildet und in Figur 8 wird ein Hohlprofil 38, zum Beispiel aus nichtgehärtetem Stahl, verwendet.

Die Gestaltung der Schiene als Verbundkonstruktion erlaubt einerseits, insbesondere für grosse Schieblehren, eine wirksame Gewichtsverminderung, andererseits eine vereinfachte Herstellung. Der Kern der Schiene muss nicht gehärtet werden, wie dies bei normalen Geräten der Fall ist; er ist deshalb dem Verzug weniger ausgesetzt, welchen die weitere Verarbeitung mit sich bringt. Die Führungselemente garantieren dabei eine lange Lebensdauer und einwandfreie Führung des Schiebers. Sie sind mit billigen Mitteln herstellbar und erfordern ein Minimum an teurem Material. Durch das Umkleiden der Messschnäbel und des Schiebers mit einer Schutzschicht wird erreicht, dass viele überflüssige Bearbeitungsoperationen wegfallen, bei gleichzeitigem Schutz dieser Teile gegen Beschädigung.

## Patentansprüche

1. Schieblehre, bestehend aus einer Schiene (1) mit einem an ihr befestigten Messschnabel (2) und einem auf der Schiene (1) beweglich angeordneten Schieber (4), der einen beweglichen Messschnabel (5) trägt, dadurch gekennzeichnet, dass die Schiene (1) , aus einem Kern (7) und auf diesem befestigten Führungselementen (8), auf welchen der Schieber (4) gleitend angeordnet ist, in Verbundkonstruktion aufgebaut ist.

2. Schieblehre gemäss Anspruch 1, dadurch gekennzeichnet, dass der Schieber (4) und die Messschnäbel (2,5) unter Ausnahme der Messanschläge (3,6) mit einer schützenden Umhüllung (13) versehen sind.

3. Schieblehre gemäss Anspruch 1 oder 2, dadurch gekennzeichnet, dass die Führungselemente (8) aus einem U-Profil bestehen und an entgegengesetzten Seiten über den Kern (7) gestülpt und auf diesem befestigt sind.

4. Schieblehre gemäss Anspruch 1 oder 2, dadurch gekennzeichnet, dass sie Führungselemente aus einem T-Profil (35) bestehen und in entgegengesetzten Seiten des Kernes (36) eingelassen und befestigt sind.

5. Schieblehre gemäss einem der Ansprüche 1 bis 4, dadurch gekennzeichnet, dass die Führungselemente (8) aus rostsicherem, gehärtetem Stahl bestehen.

6. Schieblehre gemäss Anspruch 3, dadurch gekennzeichnet, dass der Kern (7) flachseitig durch ein oder mehrere Bänder (34) abgedeckt ist, wobei die U-Profil aufweisenden Führungselemente (8) über diese Bänder gestülpt und auf diesen befestigt sind.

7. Schieblehre gemäss Anspruch 3 oder 6, dadurch gekennzeichnet, dass ein Massstab (10) zwischen den Schenkeln gegenüberliegender U-Profile der Führungselemente (8) auf dem Kern (7) befestigt ist.

8. Schieblehre gemäss Anspruch 1 oder 2, dadurch gekennzeichnet, dass der Kern von einem Doppel-T-Profil (37) gebildet wird.

9. Schieblehre gemäss einem der Ansprüche 1, 2 oder 8, dadurch gekennzeichnet, dass der Kern (7) aus einem faserverstärkten Kunststoff besteht.

10. Schieblehre gemäss Anspruch 1 oder 2, dadurch gekennzeichnet, das der Kern aus einem Hohlprofil (38) besteht.

11. Schieblehre gemäss einem der Ansprüche 1, 2 oder 10, dadurch gekennzeichnet, dass der Kern (7, 38) aus Metall besteht.

## Claims

1. A sliding caliper, comprising a beam (1) with a measuring jaw (2) attached thereto and a sliding member (4) arranged movably on the beam (1), which sliding member (4) carries a movable measuring jaw (5), characterized in that the beam (1) is constructed as a composite structure of a core (7) and guide members (8) attached thereto, on which the sliding member (4) is slidingly arranged.

2. A sliding caliper according to claim 1, characterized in that the sliding member (4) and the measuring jaws (2, 5) are provided with a protective covering (13), with the exception of the measuring stops (3, 6).

3. A sliding caliper according to claim 1 or claim 2, characterized in that the guide members (8) are U-shaped and sit astride opposite sides of the core (7) and are attached thereto.

4. A sliding caliper according to claim 1 or claim 2, characterized in that the guide members are T-shaped (35) and inserted in and attached to opposite sides of the core (36).

5. A sliding caliper according to any one of claims 1 to 4, characterized in that the guide members (8) consist of hardened stainless steel.

6. A sliding caliper according to claim 3, characterized in that the core (7) is covered by one or more strips (34), the U-shaped guide members (8) sitting astride these strips and being attached thereto.

7. A sliding caliper according to claim 3 or claim 6, characterized in that a rule (10) is attached to the core (7) between the legs of opposing V-shaped guide members (8).

8. A sliding caliper according to claim 1 or claim 2, characterized in that the cure is double T-shaped (37).

9. A sliding caliper according to any one of claims 1, 2 or 8, characterized in that the core (7) consists of a fibre-reinforced plastics material.

10. A sliding caliper according to claim 1 or claim 2, characterized in that the core consists of a hollow member (38).

11. A sliding caliper according to any one of claims 1, 2 or 10, characterized in that the core (7, 38) consists of metal.

**Revendications**

1. Pied à coulisse comprenant une glissière (1) avec un bec de mesure (2) fixé sur cette glissière et un curseur (4) disposé de façon mobile sur la glissière et portant un bec de mesure (5) mobile, caractérisé en ce que la glissière (1) est constituée, en construction composite, d'un noyau (7) et d'éléments de guidage (8) fixés sur ce dernier, sur lesquels le curseur (4) est monté de façon mobile.

2. Pied à coulisse selon la revendication 1, caractérisé en ce que de curseur (4) et les becs de mesure (2, 5) à l'exception des butées de mesure (3, 6), sont munis d'une enveloppe protectrice (13).

3. Pied à coulisse selon la revendication 1 ou 2, caractérise en ce que les éléments de guidage (8) sont constitués par un profilé en U et en ce qu'ils sont disposés par dessus le noyau (7) sur des côtés opposés.

4. Pied à coulisse selon la revendication 1 ou 2, caractérise en ce que les éléments de guidage sont constitués par des profilés en T (35) et en ce qu'ils sont encastrés et fixés dans des faces opposées du noyau (36).

5. Pied à coulisse selon l'une des revendications 1 à 4, caractérisé en ce que les éléments de guidage (8) sont constitués en acier trempé inoxydable.

6. Pied à coulisse selon la revendication 3, caractérisé en ce que le noyau (7) est recouvert par une ou plusieurs bandes (34) sur ses côtés plats, les éléments de guidage (8) comportant un profilé en U étant disposés par dessus ces bandes (7) et fixés sur ces dernières.

7. Pied à coulisse selon la revendication 3 ou 6, caractérisé en ce qu'une règle (10) est fixée entre les branches des profilés en U des éléments de guidage (8) situés en regard l'un de l'autre sur le noyau (7).

8. Pied à coulisse selon la revendication 1 ou 2, caractérisé en ce que le noyau est constitué par un profilé en double T (37).

9. Pied à coulisse selon l'une des revendications 1, 2 ou 8, caractérisé en ce que le noyau (7) est constitué en matière synthétique renforcée par des fibres.

10. Pied à coulisse selon la revendication 1 ou 2, caractérisé en ce que le noyau est constitué par un profil creux (38).

11. Pied à coulisse selon l'une des revendications 1, 2 ou 10, caractérisé en ce que le noyau (7, 38) est constitué par un métal.

FIG.1

FIG.2

FIG.3  FIG.5

FIG.4

FIG.6  FIG.7  FIG.8